# EUROPEAN PATENT APPLICATION

(11) **EP 4 752 741 A1**
(43) Date of publication of application: **03.06.2026**
(21) Application number: 24857674.6
(22) Date of filing: 29.02.2024
(51) Int. Cl.: G06F 15/163

(54) **COMMUNICATION METHOD AND APPARATUS, CHIP SYSTEM, AND ELECTRONIC DEVICE**

(30) Priority: 31.08.2023 CN 202311137203
(71) Applicant: HUAWEI TECHNOLOGIES CO., LTD., Shenzhen 518129 (CN)
(72) Inventor: HUANG, Qiang, Shenzhen, Guangdong 518129 (CN); ZHANG, Wentao, Shenzhen, Guangdong 518129 (CN); CHANG, Diankang, Shenzhen, Guangdong 518129 (CN)
(74) Representative: Goddar, Heinz J.
(86) International application number: PCT/CN2024/079482
(87) International publication number: WO 2025/044119

(57) **Abstract**

Embodiments of this application relate to a communication method and apparatus, a chip system, and an electronic device, and relate to the field of electronic technologies. The method is applied to a first communication module in a first operating system, the first operating system is run on a first processor core, the first communication module is configured to communicate with a second communication module in a second operating system, the second operating system is run on a second processor core, and the first processor core and the second processor core are located in a same electronic device. The method includes: receiving a first request from the second communication module, where the first request indicates an identity of the second communication module; when identity verification of the second communication module succeeds, processing the first request; and sending, to the second communication module, a first response obtained by processing the first request. In this way, deep collaboration can be performed between the first processor core on which the first communication module is run and the second processor core on which the second communication module is run.

## Description

This application claims priority to Chinese Patent Application No. 202311137203.0, filed with the China National Intellectual Property Administration on August 31, 2023 and entitled "COMMUNICATION METHOD AND APPARATUS, CHIP SYSTEM, AND ELECTRONIC DEVICE", which is incorporated herein by reference in its entirety.

### TECHNICAL FIELD

Embodiments of this application relate to the field of electronic technologies, and in particular, to a communication method and apparatus, a chip system, and an electronic device.

### BACKGROUND

With development of information technology and improvement of requirements, a conventional single-core system-on-chip cannot meet the requirements, and a homogeneous multi-core system-on-chip or a heterogeneous multi-core system-on-chip gradually develop. The system-on-chip may include a plurality of same or different processors, and a plurality of processor cores having different performance and usage. Each processor core uses its own computing advantages to implement optimal resource configuration, improve overall performance, reduce power consumption, and simplify a development mode. Therefore, a communication mechanism between a plurality of cores and a software programming model are especially important for multi-core performance. Currently, most homogeneous multi-core processors or heterogeneous multi-core processors use a primary-secondary structure, and in the conventional technology, there is a problem that it is difficult to collaborate between a primary processor core and a secondary processor core.

### SUMMARY

Embodiments of this application provide a communication method and apparatus, a chip system, and an electronic device, to resolve a problem in the conventional technology that it is difficult to collaborate between a primary processor core and a secondary processor core.

To achieve the foregoing objective, the following technical solutions are used in embodiments of this application.

According to a first aspect, a communication method is provided. The method is applied to a first communication module in a first operating system, the first operating system is run on a first processor core, the first communication module is configured to communicate with a second communication module in a second operating system, the second operating system is run on a second processor core, the first processor core and the second processor core are located in a same electronic device, and the method includes: receiving a first request from the second communication module, where the first request indicates an identity of the second communication module; when identity verification of the second communication module succeeds, processing the first request; and sending, to the second communication module, a first response obtained by processing the first request.

In the foregoing technical solution, in an electronic device including a plurality of operating systems, for the first communication module and the second communication module in different operating systems, the second communication module needs the first communication module to process a request of the second communication module. The second communication module sends, to the first communication module, the first request that may indicate the identity of the second communication module. The first communication module processes the first request after verifying the identity of the second communication module and returns, to the second communication module, the first response obtained through processing. In this way, for the first communication module and the second communication module that belong to different domains (different operating systems), because the first communication module may identify the identity of the second communication module by using the first request, cross-domain standard inter-process communication (where standard inter-process communication means communication between processes located in a same domain) can be implemented, and a communication capability of a heterogeneous processor core in the communication module is enhanced, so that deep collaboration can be performed between the first processor core on which the first communication module is run and the second processor core on which the second communication module is run. Further, hardware resources between different domains can be isolated, so that real-time performance of hardware processing and security of a part of hardware are improved, and resource sharing between the first communication module and the second communication module can be further implemented, to implement richer functions.

In a possible implementation of the first aspect, receiving the first request from the second communication module includes: obtaining the first request from a target memory space, where the target memory space is used to store request data of the second communication module whose identity verification succeeds. When the first request is obtained from the target memory space, identity verification of the second communication module succeeds. In the foregoing possible implementation, the target memory space is pre-configured to store the request data of the second communication module whose identity verification succeeds. When obtaining the first request from the target memory space, the first communication module may learn that the first request is from the second communication module whose identity verification succeeds. In this way, the first communication module can be enabled to identify the identity of the second communication module. This provides a basis for performing deep collaboration between the first processor core on which the first communication module is run and the second processor core on which the second communication module is run. In addition, only pre-configuration in which the first communication module and the second communication module transmit the request data by using the target memory space is needed, and there is no need to add an identity verification step each time a request is sent, so that a request sending speed is faster, and request sending is more convenient.

In a possible implementation of the first aspect, the method further includes: receiving a second request from the second communication module, where the second request indicates the identity of the second communication module, and a data length of the first request is different from a data length of the second request; when identity verification of the second communication module succeeds, processing the second request; and sending, to the second communication module, a second response obtained by processing the second request, where a data length of the first response is different from a data length of the second response. In the foregoing possible implementation, the second communication module may send the first request and the second request to the first communication module for processing, the data length of the first request is different from the data length of the second request, and the data length of the first response to the first request is different from the data length of the second response to the second request. In this way, when the first communication module communicates with the second communication module, data lengths and request types that may be sent are more diversified, and a plurality of original requests may be combined into one request for sending, so that deep collaboration can be performed between the first processor core on which the first communication module is run and the second processor core on which the second communication module is run.

In a possible implementation of the first aspect, processing the first request includes: generating a third request based on the first request; and processing the third request, where the first response is a response to the third request. In the foregoing possible implementation, the first request is a request from the second communication module. The first communication module receives the first request and generates the third request based on the first request. The first request whose initiator is the second communication module is converted into the third request whose initiator is the first communication module, so that the first communication module uses the third request as a request of the first operating system for processing. This provides a basis for performing deep collaboration between the first processor core on which the first communication module is run and the second processor core on which the second communication module is run.

In a possible implementation of the first aspect, the first request includes identity identification information of the second communication module, and that identity verification of the second communication module succeeds includes: Verification of the identity identification information succeeds. In the foregoing possible implementation, the identity identification information of the second communication module is set in the first request, so that the first communication module can identify the identity of the second communication module. This provides a basis for performing deep collaboration between the first processor core on which the first communication module is run and the second processor core on which the second communication module is run.

In a possible implementation of the first aspect, the first request is used to request to perform at least one of the following functions: non-volatile memory access, standard inter-process communication, or page fault exception handling. In the foregoing possible implementation, the first request is used to perform at least one of the following: non-volatile memory access, standard inter-process communication, or page fault exception handling. In this way, in one aspect, the second communication module does not need to depend on a file system to access a file, the second communication module can access a file of the first communication module, shared file access can be implemented between the second communication module and the first communication module, and the first communication module can offload a core service to the second communication module for processing. In another aspect, the first communication module and the second communication module can implement collaboration on page fault exception, so that the first communication module and the second communication module can share a page cache, to save a memory space. In still another aspect, the first communication module and the second communication module can implement cross-domain standard inter-process communication. Therefore, deep collaboration can be performed between the first processor core on which the first communication module is run and the second processor core on which the second communication module is run.

According to a second aspect, a communication method is provided. The method is applied to a second communication module in a second operating system, the second operating system is run on a second processor core, the second communication module is configured to communicate with a first communication module in a first operating system, the first operating system is run on a first processor core, the first processor core and the second processor core are located in a same electronic device, and the method includes: sending a first request to the first communication module, where the first request indicates an identity of the second communication module; and receiving, from the first communication module, a first response to the first request.

In the foregoing possible implementation, in an electronic device including a plurality of operating systems, for the first communication module and the second communication module in different operating systems, the second communication module needs the first communication module to process a request of the second communication module. The second communication module sends, to the first communication module, the first request that may indicate the identity of the second communication module. The first communication module processes the first request and returns the first response, so that the second communication module can obtain the first response obtained by processing the first request. In this way, for the first communication module and the second communication module that belong to different domains (different operating systems), because the first communication module may identify the identity of the second communication module by using the first request, cross-domain standard inter-process communication (where standard inter-process communication means communication between processes located in a same domain) can be implemented, and a communication capability of a heterogeneous processor core in the communication module is enhanced, so that deep collaboration can be performed between the first processor core on which the first communication module is run and the second processor core on which the second communication module is run. Further, hardware resources between different domains can be isolated, so that real-time performance of hardware processing and security of a part of hardware are improved, and resource sharing between the first communication module and the second communication module can be further implemented, to implement richer functions.

In a possible implementation of the second aspect, sending the first request to the first communication module includes: storing the first request in a target memory space, where the target memory space is used to store request data of the second communication module whose identity verification succeeds. In the foregoing possible implementation, the target memory space is pre-configured to store the request data of the second communication module whose identity verification succeeds. The second communication module stores the first request in the target memory space. In this way, when obtaining the first request from the target memory space, the first communication module may learn that the first request is from the second communication module whose identity verification succeeds. In this way, the first communication module can be enabled to identify the identity of the second communication module. This provides a basis for performing deep collaboration between the first processor core on which the first communication module is run and the second processor core on which the second communication module is run. In addition, only pre-configuration in which the first communication module and the second communication module transmit the request data by using the target memory space is needed, and there is no need to add an identity verification step each time a request is sent, so that a request sending speed is faster, and request sending is more convenient.

In a possible implementation of the second aspect, the method further includes: sending a second request to the first communication module, where the second request indicates the identity of the second communication module, and a data length of the first request is different from a data length of the second request; and receiving, from the first communication module, a second response to the second request, where a data length of the first response is different from a data length of the second response. In the foregoing possible implementation, the second communication module may send the first request and the second request to the first communication module for processing, the data length of the first request is different from the data length of the second request, and the data length of the first response to the first request is different from the data length of the second response to the second request. In this way, when the first communication module communicates with the second communication module, data lengths and request types that may be sent are more diversified, and a plurality of original requests may be combined into one request for sending, so that deep collaboration can be performed between the first processor core on which the first communication module is run and the second processor core on which the second communication module is run.

In a possible implementation of the second aspect, a target process is run in the second operating system. Before sending the first request to the first communication module, the method further includes: obtaining an initial request from the target process, and generating the first request based on the initial request, where the first request includes identity identification information of the second communication module. In the foregoing possible implementation, the second communication module obtains the initial request of the target process, generates, based on the initial request, the first request including the identity identification information of the second communication module, and forwards the first request to the first communication module for processing. In this way, the request of the target process can be forwarded to the first communication module for processing without changing running code of the target process, to provide a basis for performing deep collaboration between the first processor core on which the first communication module is run and the second processor core on which the second communication module is run.

In a possible implementation of the second aspect, after receiving, from the first communication module, the first response to the first request, the method further includes: processing the first response, and sending a processed first response to the target process. In the foregoing possible implementation, a second kernel only needs to perform simple subsequent processing on the first response after receiving the first response, so that when the second operating system does not support complete processing of the first request, or the second processor core has insufficient computing power, the first communication module can process the first request to obtain the first response. This provides a basis for performing deep collaboration between the first processor core on which the first communication module is run and the second processor core on which the second communication module is run.

In a possible implementation of the second aspect, the first request is used to request to perform at least one of the following functions: non-volatile memory access, standard inter-process communication, or page fault exception handling. In the foregoing possible implementation, the first request is used to perform at least one of the following: non-volatile memory access, standard inter-process communication, or page fault exception handling. In this way, in one aspect, the second communication module does not need to depend on a file system to access a file, the second communication module can access a file of the first communication module, shared file access can be implemented between the second communication module and the first communication module, and the first communication module can offload a core service to the second communication module for processing. In another aspect, the first communication module and the second communication module can implement collaboration on page fault exception, so that the first communication module and the second communication module can share a page cache, to save a memory space. In still another aspect, the first communication module and the second communication module can implement cross-domain standard inter-process communication. Therefore, deep collaboration can be performed between the first processor core on which the first communication module is run and the second processor core on which the second communication module is run.

According to a third aspect, a communication apparatus is provided. The apparatus includes a first communication module in a first operating system. The first operating system is run on a first processor core. The first communication module is configured to communicate with a second communication module in a second operating system. The second operating system is run on a second processor core. The first processor core and the second processor core are located in a same electronic device. The first communication module includes a first control information management module and a first processing module. The first control information management module is configured to receive a first request from the second communication module, where the first request indicates an identity of the second communication module. The first processing module is configured to process the first request when identity verification of the second communication module succeeds. The first control information management module is configured to send, to the second communication module, a first response obtained by processing the first request.

In a possible implementation of the third aspect, the first control information management module is specifically configured to obtain the first request from a target memory space. The target memory space is used to store request data of the second communication module whose identity verification succeeds. When the first request is obtained from the target memory space, identity verification of the second communication module succeeds.

In a possible implementation of the third aspect, the first control information management module supports transmission of information of different data lengths. The first control information management module is further configured to receive a second request from the second communication module, where the second request indicates the identity of the second communication module, and a data length of the first request is different from a data length of the second request. The first processing module is further configured to process the second request when identity verification of the second communication module succeeds. The first control information management module is further configured to send, to the second communication module, a second response obtained by processing the second request, where a data length of the first response is different from a data length of the second response.

In a possible implementation of the third aspect, the first processing module includes an identity agent module and a first kernel. The identity agent module is configured to generate a third request based on the first request. The first kernel is configured to process the third request, where the first response is a response to the third request.

In a possible implementation of the third aspect, the first request includes identity identification information of the second communication module. The first processing module includes the identity agent module. The identity agent module is configured to verify the identity identification information. That identity verification of the second communication module succeeds includes: Verification of the identity identification information succeeds.

In a possible implementation of the third aspect, the first request is used to request to perform at least one of the following functions: non-volatile memory access, standard inter-process communication, or page fault exception handling.

According to a fourth aspect, a communication apparatus is provided. The apparatus includes a second communication module in a second operating system. The second operating system is run on a second processor core. The second communication module is configured to communicate with a first communication module in a first operating system. The first operating system is run on a first processor core. The first processor core and the second processor core are located in a same electronic device. The second communication module includes a second control information management module. The second control information management module is configured to send a first request to the first communication module, where the first request indicates an identity of the second communication module. The second control information management module is configured to receive, from the first communication module, a first response to the first request.

In a possible implementation of the fourth aspect, the second control information management module is specifically configured to store the first request in a target memory space, where the target memory space is used to store request data of the second communication module whose identity verification succeeds.

In a possible implementation of the fourth aspect, the second control information management module supports transmission of information of different data lengths. The second control information management module is further configured to send a second request to the first communication module, where the second request indicates the identity of the second communication module, and a data length of the first request is different from a data length of the second request. The second control information management module is further configured to receive, from the first communication module, a second response to the second request, where a data length of the first response is different from a data length of the second response.

In a possible implementation of the fourth aspect, the second communication module further includes a request forwarding module. A target process is run in the second operating system. The request forwarding module is configured to: obtain an initial request from the target process and generate the first request based on the initial request, where the first request includes identity identification information of the second communication module.

In a possible implementation of the fourth aspect, the second communication module further includes a second kernel. The second kernel is configured to: process the first response and send a processed first response to the target process.

In a possible implementation of the fourth aspect, the first request is used to request to perform at least one of the following functions: non-volatile memory access, standard inter-process communication, or page fault exception handling.

According to a fifth aspect, a chip system is provided. The chip system includes a first processor core and a second processor core. A first operating system is run on the first processor core. The first operating system includes the first communication module provided in any one of the first aspect or the possible implementations of the first aspect. A second operating system is run on the second processor core. The second operating system includes the second communication module provided in any one of the second aspect or the possible implementations of the second aspect.

According to a sixth aspect, an electronic device is provided. The electronic device includes a storage and the chip system provided in the fifth aspect.

In a possible implementation of the sixth aspect, the electronic device includes at least one of the following: a receiver, a switch, a router, or a vehicle.

According to a seventh aspect, a computer-readable storage medium is provided. The computer-readable storage medium stores program code, and the program code may be invoked by a processor to perform the communication method provided in any one of the first aspect or the possible implementations of the first aspect.

According to an eighth aspect, a computer-readable storage medium is provided. The computer-readable storage medium stores program code, and the program code may be invoked by a processor to perform the communication method provided in any one of the second aspect or the possible implementations of the second aspect.

According to another aspect of this application, a computer program product is provided. When the computer program product is run on a computer, the computer is enabled to perform the communication method provided in any one of the first aspect or the possible implementations of the first aspect.

According to still another aspect of this application, a computer program product is provided. When the computer program product is run on a computer, the computer is enabled to perform the communication method provided in any one of the second aspect or the possible implementations of the second aspect.

It may be understood that any communication apparatus, electronic device, computer storage medium, or computer program product provided above is configured to perform the corresponding method provided above. Therefore, for beneficial effect that can be achieved by the communication apparatus, electronic device, computer storage medium, or computer program product, refer to beneficial effect in the corresponding method provided above. Details are not described herein again.

### BRIEF DESCRIPTION OF DRAWINGS

FIG. 1 is a diagram of a structure of an electronic device according to an embodiment of this application;
FIG. 2 is a diagram of an operating system according to an embodiment of this application;
FIG. 3 is a diagram of a primary processor core and a secondary processor core according to an embodiment of this application;
FIG. 4 is a schematic flowchart 1 of a communication method according to an embodiment of this application;
FIG. 5 is a schematic flowchart 2 of a communication method according to an embodiment of this application;
FIG. 6 is a schematic flowchart 3 of a communication method according to an embodiment of this application;
FIG. 7 is a diagram of a communication module according to an embodiment of this application;
FIG. 8 is a schematic flowchart 4 of a communication method according to an embodiment of this application;
FIG. 9 is a diagram of a communication apparatus according to an embodiment of this application;
FIG. 10 is a diagram of another communication apparatus according to an embodiment of this application;
FIG. 11 is a diagram of a chip system according to an embodiment of this application; and
FIG. 12 is a diagram of an electronic device according to an embodiment of this application.

### DESCRIPTION OF EMBODIMENTS

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. "At least one of the following items (pieces)" or a similar expression thereof means any combination of a singular item (piece) or plural items (pieces). For example, at least one item (piece) of a, b, or c may represent a, b, c, a and b, a and c, b and c, or a, b, and c, where a, b, and c may be singular or plural. The character "/" generally indicates an "or" relationship between the associated objects. In addition, in embodiments of this application, terms such as "first" and "second" do not limit a quantity or an execution sequence.

In embodiments of this application, the description of "step B is further included before/after step A" is merely intended to introduce step B or for ease of reading, and is not limited to that step B is placed before/after step A, or that step B can be performed only after step A.

In embodiments of this application, the term "example", "for example", or the like is used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

Before embodiments of this application are described, the related technical terms in embodiments of this application are described first.

### (1) Processor core, single-core processor, and multi-core processor

A processor core is a core circuit in a processor excluding a package and an auxiliary circuit (such as a pin interface circuit, a power supply circuit, and a clock circuit). A processor core circuit is configured to complete control and information processing functions. For example, the processor core may read instructions from a memory of the processor, and execute control and computing tasks specified by the instructions. The processor core may be referred to as a processor core or a core for short in the following.

A single-core processor (single-core processor) is a processor that integrates one processor core and a related auxiliary circuit. A multi-core processor (multi-core processor) is a processor that integrates a plurality of processor cores and related auxiliary circuits. Generally, compared with the single-core processor, the multi-core processor includes more auxiliary circuits to resolve communication and coordination problems between the plurality of processor cores.

The multi-core processor can process a single-thread task as the single-core processor. However, the multi-core processor can decompose the task and run the task by using a plurality of cores at the same time, to improve a processing speed.

### (2) Homogeneous multi-core processor and heterogeneous multi-core processor

From a perspective of hardware, a multi-core design is classified into two types. If all cores or processors have a same architecture, the processor is defined as a homogeneous (homogeneous) multi-core processor. If architectures are different, the processor is defined as a heterogeneous (heterogeneous) multi-core processor. From a perspective of an application, most homogeneous multi-core processors are formed by general-purpose processor cores, and each processor core may run independently. The heterogeneous multi-core processor generally incorporates processor cores such as a general-purpose processor, a digital signal processor (digital signal processor, DSP), a field-programmable gate array (field-programmable gate array, FPGA) processor, a media processor, and a network processor simultaneously. Each processor core is set based on different requirements, to improve computing performance or real-time performance of an application.

### (3) Multi-domain collaboration

An independent execution environment that is run on an independent resource is referred to as a domain, and domains may be homogeneous or heterogeneous environments. For example, in a 16-core system (where the 16-core system may be integrated into one or more processors), processor cores 0 to 11 may be configured to run an operating system (operating system, OS) A, processor cores 12 to 15 may be configured to run an operating system B, and another processor core different from the 16-core system may be configured to run an operating system C. Each operating system is a domain, and collaboration and interaction between processes of the operating systems are multi-domain collaboration.

### (4) Process

A process (process) is a running activity, regarding a dataset, of a program in a computer system, is a basic unit for performing resource allocation by the computer system, and is a basis of an operating system structure. The process is a basic unit for dynamic execution of an operating system. In a conventional operating system, the process is both a basic allocation unit and a basic execution unit. Different processes have independent spaces in the memory. By default, data is not shared between processes.

After related technical terms in embodiments of this application are described, an application scenario of embodiments of this application is described. An embodiment of this application provides a communication method, and the method may be applied to an electronic device. The electronic device includes but is not limited to a mobile phone (mobile phone), a computer, a tablet computer, a notebook computer, a palmtop computer, a wearable device (for example, a smartwatch, a smart band, or a pedometer), an in-vehicle device (for example, a vehicle, a bicycle, an electric vehicle, an airplane, a ship, a train, or a high-speed railway), a virtual reality (virtual reality, VR) device, an augmented reality (augmented reality, AR) device, a communication device (for example, a connector, a switch, or a router), or the like.

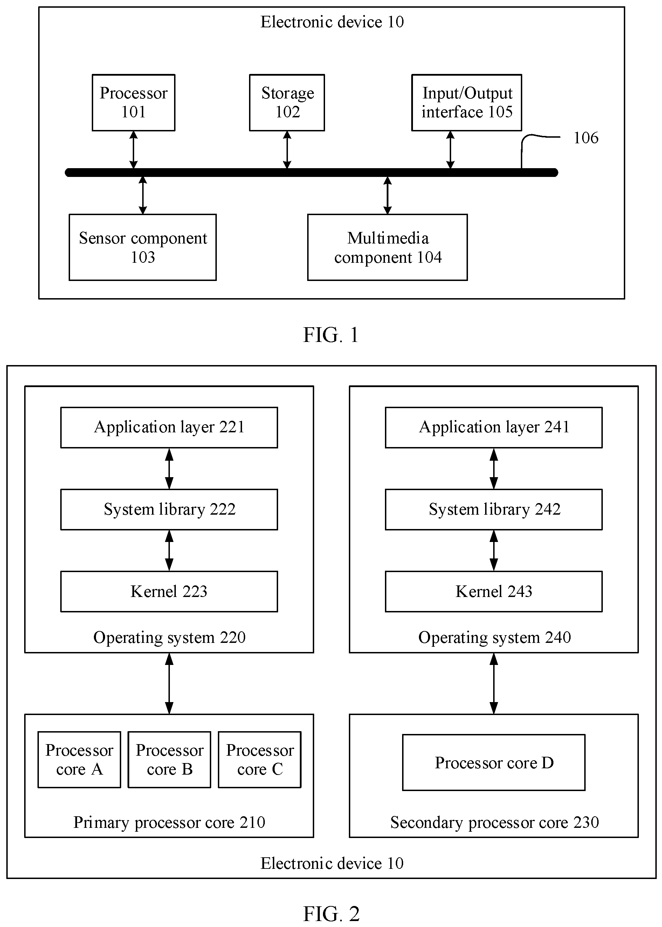

The following describes a specific structure of an electronic device 10 by using an example with reference to FIG. 1. The electronic device 10 or a chip system built in the electronic device 10 may include a processor 101, a storage 102, and instructions stored in the storage 102, and may further include a sensor component 103, a multimedia component 104, and an input/output interface 105. In addition, the processor 101, the storage 102, the sensor component 103, the multimedia component 104, and the input/output interface 105 may be separately connected through a bus 106.

The processor 101 is a control center of the electronic device 10, is connected to each part of the entire device through various interfaces and lines, and implements, by running or executing a software program and/or software module stored in the storage 102 and invoking data stored in the storage 102, to implement various functions of the electronic device 10 and data processing, so as to perform overall monitoring on the electronic device 10. In this embodiment of this application, the processor 101 may be configured to perform one or more steps in the method embodiment of this application. For example, when the processor 101 runs the instructions stored in the storage 102, the processor 101 may be configured to perform one or more steps in the following method embodiment, so that the electronic device 10 is enabled to implement the method in the following method embodiment.

In some embodiments, the processor 101 may be a single-processor structure, a multiprocessor structure, a single-thread processor, a multi-thread processor, or the like. In some embodiments, the processor 101 may include at least one of a central processing unit (central processing unit, CPU), a general-purpose processor, a digital signal processor, a neural network processor, a graphics processing unit (graphics processing unit, GPU), an image signal processor, a microcontroller, a microprocessor, or the like. In some embodiments, the processor 101 may further include another hardware circuit or accelerator, such as an application-specific integrated circuit, a field-programmable gate array or another programmable logic device, a transistor logic device, a hardware component, or any combination thereof. Alternatively, the processor 101 may be a combination for implementing a computing function, for example, a combination including one or more microprocessors, or a combination of the digital signal processor and the microprocessor.

The storage 102 may be configured to store data, a software program, and a module, and mainly includes a program storage area and a data storage area. The program storage area may store a software program, including instructions formed by code and including but not limited to an operating system and an application program required by at least one function, such as a file opening function. The data storage area may store data created based on use of the electronic device 10, such as file data.

The sensor component 103 includes one or more sensors and is configured to provide the electronic device 10 with status assessment in various aspects. For example, acceleration/deceleration, orientation, and an on/off state of the electronic device 10, relative positioning of a component, or a temperature change of the electronic device 10 may be detected.

The multimedia component 104 may provide a screen of an output interface between the electronic device 10 and the user. The screen may be a touchscreen to receive an input signal from the user. The multimedia component 104 may further include at least one camera and the like.

The input/output interface 105 provides an interface between the processor 101 and a peripheral interface module. For example, the peripheral interface module may include a keyboard, a mouse, or a USB (universal serial bus) device. In a possible implementation, the input/output interface 105 may have only one input/output interface, or may have a plurality of input/output interfaces.

Although not shown, the electronic device 10 may further include an audio component, a communication component, and the like. For example, the audio component includes a microphone, and the communication component includes a wireless fidelity (wireless fidelity, Wi-Fi) module, a Bluetooth module, or the like. Details are not described herein in this embodiment of this application. Details are not described herein in this embodiment of this application.

The following describes an operating system of the electronic device 10 by using an example with reference to FIG. 2. An operating system 220 run on a primary processor core 210 and an operating system 240 run on a secondary processor core 230 are deployed in the electronic device 10. The primary processor core 210 may include homogeneous or heterogeneous processor cores A, B, and C. The operating system 220 may include an application layer 221, a system library 222, and a kernel 223. The operating system 220 may run most services and system services of the electronic device 20. The secondary processor core 230 may include a processor core D. The operating system 240 may include an application layer 241, a system library 242, and a kernel 243. For example, the operating system 240 may include a user-mode library, and may run software such as a network protocol stack (high-performance stack, HPS) and a forwarding plane service (high-performance forwar240, HPF) that have a high-performance requirement. Optionally, the operating system 240 may further run software used for storage and transmission of a part of data. A network service may be on a side of the operating system 220. When the operating system 220 sends a packet to the outside, a network service request is sent to the operating system 240, and the network service request is sent to the outside by using the HPS and the HPF via a network adapter.

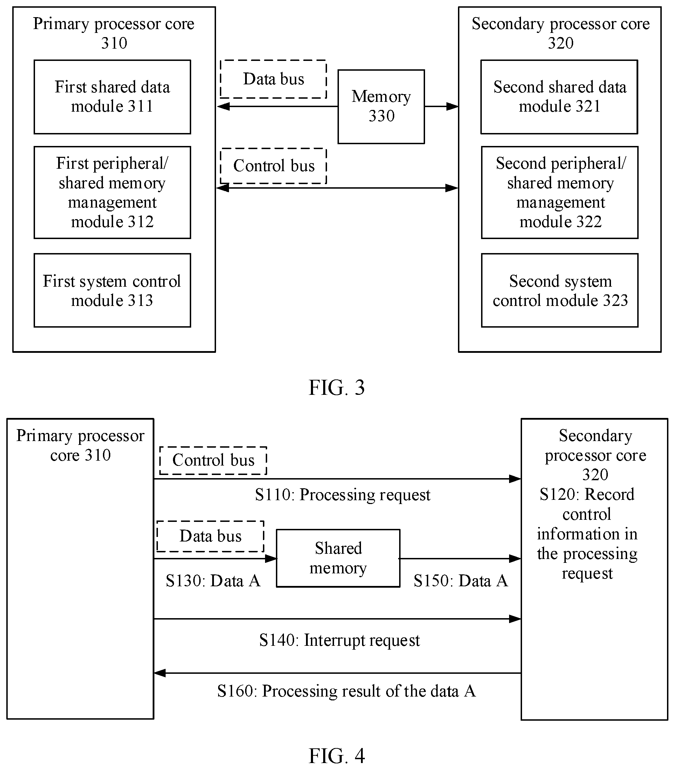

The following describes a possible inter-core communication manner of a primary processor core 310 and a secondary processor core 320 with reference to FIG. 3. The primary processor core 310 communicates with the secondary processor core 320 through a transmission bus such as a data bus and a control bus. Software modules such as a first shared data module 311, a first peripheral/shared memory management module 312, and a first system control module 313 are deployed in the primary processor core 310. Software modules such as a second shared data module 321, a second peripheral/shared memory management module 322, and a second system control module 323 are deployed in the secondary processor core 320. The first shared data module 311 and the second shared data module 312 are configured to transmit data of a memory 330 (where the memory 330 may be used as a shared memory), a message queue (message queue), a frame queue (frame queue), or a ring queue (ring queue). The first peripheral/shared memory management module 312 and the second peripheral/shared memory management module 322 are configured to transmit control information of peripheral management and shared internal management. The first system control module 313 and the second system control module 323 are configured to transmit interrupt control information. The primary processor core 310 sends a request to the secondary processor core 320 by using an interrupt (interrupt), and uses the memory 330 to implement data transmission. Each processor core implements peripheral access and data channel connection through the control bus.

With reference to FIG. 4, the following describes a process in which the primary processor core 310 sends data A to the secondary processor core 320 for processing. The process includes steps S110 to S160.

S110: The primary processor core 310 sends a processing request, where the processing request includes control information such as a data length of the data A and memory access permission.

S120: The secondary processor core 320 receives the processing request and records the control information.

S130: The primary processor core 310 writes the data A into a shared memory.

S140: The primary processor core 310 sends an interrupt request to the secondary processor core 320.

S150: The secondary processor core 320 receives the interrupt request, and reads and processes the data A from the shared memory based on the control information.

S160: The secondary processor core 320 returns a processing result of the data A to the primary processor core 310.

According to the method shown in FIG. 4, simple communication may be performed between the primary processor core 310 and the secondary processor core 320 that belong to different domains. For example, the primary processor core 310 may send the processing request to the secondary processor core 320, and the primary processor core 310 may send data to the secondary processor core 320. The primary processor core 310 may offload some functions to the secondary processor core 320. However, the secondary processor core 320 needs to rely on a file system to implement file access. In addition, communication between cross-domain processor cores cannot support standard inter-process communication, the primary processor core 310 and the secondary processor core 320 each consume a page cache, and memory overheads are high. Therefore, it is difficult to perform deep collaboration between the primary processor core 310 and the secondary processor core 320.

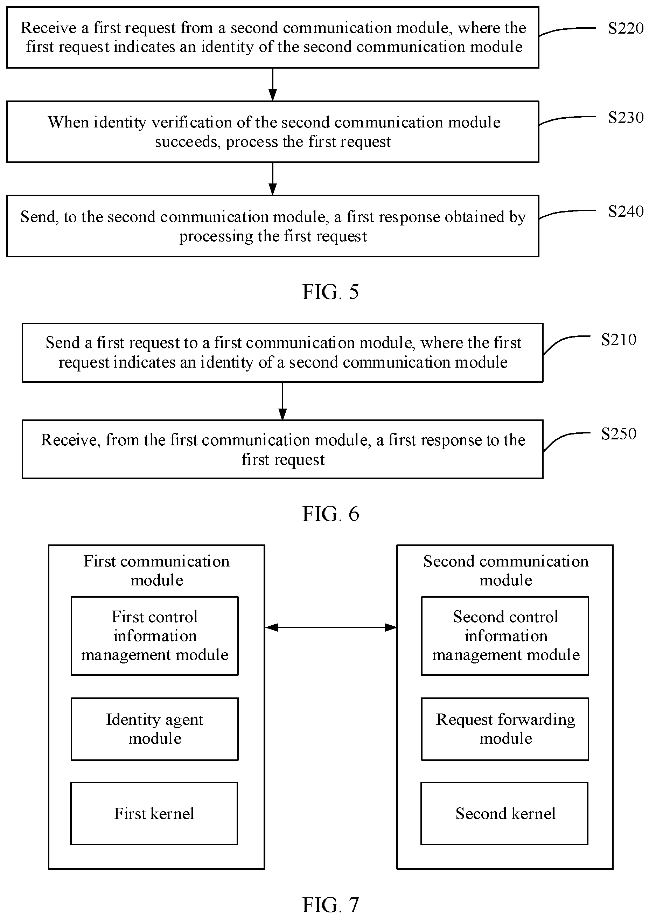

Based on this, to resolve a problem that it is difficult to perform deep collaboration between a plurality of processor cores that belong to different domains, embodiments of this application provide a communication method. The following describes possible implementations of the communication method provided in embodiments of this application with reference to FIG. 5 and FIG. 6. An electronic device includes a first processor core and a second processor core. A first operating system is run on the first processor core. The first operating system includes a first communication module. The second operating system is run on the second processor core. The second operating system includes a second communication module. The first communication module is configured to communicate with the second communication module. The method shown in FIG. 5 is applied to the first communication module and includes steps S220, S230, and S240. The method shown in FIG. 6 is applied to the second communication module and includes steps S210 and S250.

S210: The second communication module sends a first request to the first communication module, where the first request indicates an identity of the second communication module.

S220: The first communication module receives the first request from the second communication module.

S230: The first communication module processes the first request when identity verification of the second communication module succeeds.

S240: The first communication module sends, to the second communication module, a first response obtained by processing the first request.

S250: The second communication module receives, from the first communication module, the first response to the first request.

An operating system is a set of interrelated system software programs that manage and control computer operations, use and run hardware and software resources, and provide public services to organize user interaction. A communication module is a software module in an operating system. For example, refer to FIG. 7. The first communication module may include a first control information management module, an identity agent module, and a first kernel, and the second communication module may include a second control information management module, a request forwarding module, and a second kernel. Steps S210 and S250 may be performed by the second control information management module, steps S220 and S240 may be performed by the first control information management module, and step S230 may be performed by the identity agent module and the first kernel. The first control information management module may be disposed in the first peripheral/shared memory management module 312 in FIG. 3. The second control information management module may be disposed in the second peripheral/shared memory management module 322 in FIG. 3.

In addition, the first request may be a service request initiated by a process run in the second operating system. If the first request is a request of a data access type, the first request may include indication information of to-be-accessed data, and may further include control information such as a size of the to-be-accessed data and access permission (for example, read-only or write-only).

In addition, the first processor core and the second processor core may be integrated in a same chip, or may be located on different chips. There may be one or more second processor cores. The first processor core and the second processor core may be homogeneous processor cores or may be heterogeneous processor cores. The first processor core and the second processor core may be CPU processor cores, GPU processor cores, or other types of processor cores. This is not limited in this embodiment of this application.

In an example, the first processor core may be a primary processor core, and the second processor core may be a secondary processor core. In the method shown in FIG. 4, because the primary processor core and the secondary processor core cannot identify an identity of a process run by each other, the secondary processor core cannot send a request to the primary processor core. In this embodiment, because the primary processor core may identify an identity of the secondary processor core, the secondary processor core may send the first request to the primary processor core.

In another example, the first processor core may be a secondary processor core, and the second processor core may be a primary processor core. In the method shown in FIG. 4, the primary processor core may send the processing request and the interrupt request to the secondary processor core only through inter-core communication. In this embodiment, if the primary processor core needs assistance from the secondary processor core in processing the first request, the first request may indicate an identity of the primary processor core, so that standard inter-process communication between the primary processor core and the secondary processor core can be implemented.

In a possible implementation, both the first operating system and the second operating system support processing of the first request, but computing power of the second processor core is insufficient. Therefore, the first request that needs to be processed by the second processor core is sent to the first processor core for processing.

In another possible implementation, the first operating system supports processing of the first request, and the second operating system does not support processing of the first request. For example, when the second processor core is a secondary processor core, to maintain a high-performance running environment and reduce system complexity, the second operating system does not include a file system, and the second communication module cannot access data in a hard disk. If a service executed by the second operating system has a requirement of accessing file data, the second communication module may send the first request used to access the data in the hard disk to the first communication module for processing.

In the technical solution provided in this embodiment of this application, in the electronic device including a plurality of operating systems, for the first communication module and the second communication module in different operating systems, the second communication module needs the first communication module to process a request of the second communication module. The second communication module sends, to the first communication module, the first request that may indicate the identity of the second communication module. The first communication module processes the first request after verifying the identity of the second communication module and returns, to the second communication module, the first response obtained through processing. In this way, for the first communication module and the second communication module that belong to different domains (different operating systems), because the first communication module may identify the identity of the second communication module by using the first request, cross-domain standard inter-process communication (where standard inter-process communication means communication between processes located in a same domain) can be implemented, and a communication capability of a heterogeneous processor core in the communication module is enhanced, so that deep collaboration can be performed between the first processor core on which the first communication module is run and the second processor core on which the second communication module is run. Further, hardware resources between different domains can be isolated, so that real-time performance of hardware processing and security of a part of hardware are improved, and resource sharing between the first communication module and the second communication module can be further implemented, to implement richer functions.

The following describes an identity verification manner of the second communication module by using the following several embodiments.

In a first possible implementation, before step S210 (in which the second communication module sends the first request to the first communication module), the method includes: The second communication module stores the first request in a target memory space, where the target memory space is used to store request data of the second communication module whose identity verification succeeds.

Step S220 (in which the first communication module receives the first request from the second communication module) includes: The first communication module obtains the first request from the target memory space. When the first request is obtained from the target memory space, identity verification of the second communication module succeeds.

A request during cross-domain communication may be transmitted by using a memory (where the memory is used as a shared memory). A request between two different communication modules may be transferred by using different memory spaces. The shared memory may include a plurality of memory spaces. The electronic device is pre-configured by using a system to transmit a request between the first communication module and the second communication module by using a target memory space in the plurality of memory spaces. When receiving the first request from the target memory space, the first communication module may learn that the first request is sent by the second communication module whose identity verification succeeds, and the first communication module may directly trust the related data that is of the first request and that is written by the second communication module into the shared memory.

For example, the first processor core is a primary processor core, the second processor core is a secondary processor core, and a target process is run in the second operating system. Before step S210 (in which the second communication module sends the first request to the first communication module), the method further includes: The target process sends the first request to the second kernel. The request forwarding module in the second communication module intercepts the first request, and the first request is stored in the target memory space by using the second control information management module.

In this implementation, the target memory space is pre-configured to store the request data of the second communication module whose identity verification succeeds. The second communication module stores the first request in the target memory space, and the first communication module obtains the first request from the target memory space. In this way, when obtaining the first request from the target memory space, the first communication module may learn that the first request is from the second communication module whose identity verification succeeds. In this way, the first communication module can be enabled to identify the identity of the second communication module. This provides a basis for performing deep collaboration between the first processor core on which the first communication module is run and the second processor core on which the second communication module is run. In addition, only pre-configuration in which the first communication module and the second communication module transmit the request data by using the target memory space is needed, and there is no need to add an identity verification step each time a request is sent, so that a request sending speed is faster, and request sending is more convenient.

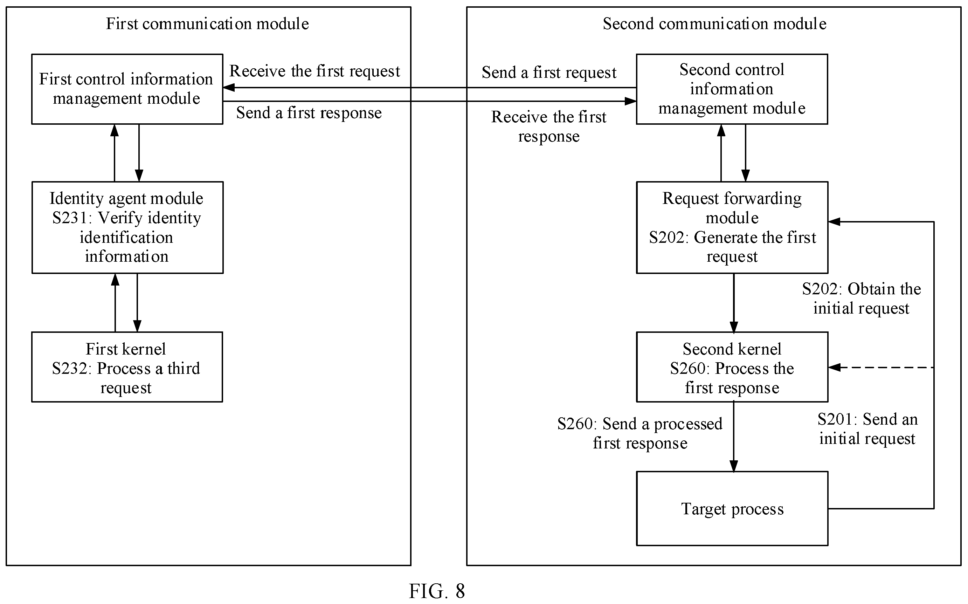

In a second possible implementation, refer to FIG. 8. A target process is run in the second operating system. Before step S210 (in which the second communication module sends the first request to the first communication module), the method may further include steps S201 and S202.

S201: The target process sends an initial request.

S202: The second communication module obtains the initial request from the target process, and generates the first request based on the initial request, where the first request includes identity identification information of the second communication module.

A difference between the initial request and the first request may lie in that the initial request does not include the identity identification information of the second communication module, and the first request includes the identity identification information of the second communication module.

For example, the first processor core is a primary processor core, and the second processor core is a secondary processor core. That the target process sends the initial request may be: The target process sends the initial request to the second kernel. Obtaining the initial request from the target process may be: The request forwarding module intercepts the first request. Generating the first request based on the initial request may be: The request forwarding module adds the identity identification information to the initial request, to obtain the first request. Same as the method shown in FIG. 4, the target process run in the second operating system sends the initial request to the second kernel when the initial request needs to be processed. Different from the method shown in FIG. 4, the request forwarding module intercepts the initial request. An interception object of the request forwarding module may be determined based on a request type, for example, a request of a data access type.

In this implementation, the target process sends the initial request, so that the second operating system processes the initial request. The second communication module obtains the initial request, generates, based on the initial request, the first request including the identity identification information of the second communication module, and forwards the first request to the first communication module for processing. In this way, the request of the target process can be forwarded to the first communication module for processing without changing running code of the target process, to provide a basis for performing deep collaboration between the first processor core on which the first communication module is run and the second processor core on which the second communication module is run.

For example, the first request includes the identity identification information of the second communication module. That identity verification of the second communication module succeeds includes: Verification of the identity identification information succeeds. Before step S230 (in which the first communication module processes the first request when identity verification of the second communication module succeeds), the method may further include step S231: The first communication module verifies the identity identification information.

The identity identification information in the first request may be used to enable the first communication module to identify the identity of the second communication module. Optionally, the first communication module may receive first requests from a plurality of second communication modules. Identity identification information in the first requests from different second communication modules is different, and each piece of identity identification information uniquely corresponds to one second communication module.

For example, the identity agent module may perform step S231. The identity agent module may verify the identity identification information in a manner of verifying by using a policy configuration file, mandatory access control (MAC), discretionary access control (DAC), or system configuration. For example, the first communication module includes the policy configuration file. The policy configuration file includes security settings related to identity verification, a password policy, network security, and access control of another communication module, and user settings related to a configuration file, permission, and a restriction of another communication module. When receiving the first request, the identity agent module verifies, based on the policy configuration file and identity verification information in the first request, that the first request comes from the second communication module and that an operation of the first request meets permission, and determines that verification of the identity identification information succeeds.

In the technical solution provided in this embodiment of this application, that identity verification of the second communication module succeeds includes: Verification of the identity identification information in the first request succeeds. In this way, the first communication module can be enabled to identify the identity of the second communication module. This provides a basis for performing deep collaboration between the first processor core on which the first communication module is run and the second processor core on which the second communication module is run.

The foregoing describes a process in which the second communication module sends the first request, and the first communication module verifies the identity of the second communication module. The following describes a process of processing the first request.

In a possible implementation, step S230 (in which the first communication module processes the first request when identity verification of the second communication module succeeds) includes step S232: generating a third request based on the first request, and processing the third request, where the first response is a response to the third request.

A difference between the first request and the third request lies in that initiators of the two requests are different. An initiator of the first request is the target process of the second communication module, and an initiator of the third request is the first communication module. For example, after verification of the identity verification information of the first request succeeds, the identity agent module generates the third request based on the first request, where the initiator of the third request is the identity agent module of the first communication module. The identity agent module of the first communication module is used as an agent process of the second communication module and initiates the third request to the first kernel, and the first kernel processes the third request in a manner of processing a process request of the first operating system.

In the technical solution provided in this embodiment of this application, the first request is a request from the second communication module. The first communication module receives the first request and generates the third request based on the first request. The first request whose initiator is the second communication module is converted into the third request whose initiator is the first communication module, so that the first communication module uses the third request as a request of the first operating system for processing. This provides a basis for performing deep collaboration between the first processor core on which the first communication module is run and the second processor core on which the second communication module is run.

The following describes a processing process after the second communication module receives the first response. After the second communication module receives the first response, the following several implementations may be included.

In a first possible implementation, the first communication module has processed the first request and obtained the first response required by the target process, and after receiving the first response obtained by processing the first request, the second communication module sends the first response to the target process. In this way, the second communication module does not need to process the first request, and only performs a function of forwarding the first response, so that when the second operating system does not support processing of the first request, or the second processor core has insufficient computing power, the first communication module can process the first request. This provides a basis for performing deep collaboration between the first processor core on which the first communication module is run and the second processor core on which the second communication module is run.

In a second possible implementation, after the first communication module processes the first request, the second communication module further needs to perform subsequent processing on the first request. After step S250 (receiving, from the first communication module, the first response to the first request), the method may further include step S260: processing the first response, and sending a processed first response to the target process. Step S260 may be performed by the second kernel of the second communication module.

In the technical solution provided in this embodiment of this application, after receiving the first response, the second communication module further needs to process the first response and send the processed first response to the target process. In this way, the second kernel only needs to perform simple subsequent processing on the first response, so that when the second operating system does not support complete processing of the first request, or the second processor core has insufficient computing power, the first communication module can process the first request to obtain the first response. This provides a basis for performing deep collaboration between the first processor core on which the first communication module is run and the second processor core on which the second communication module is run.

In a possible implementation, the method further includes: The second communication module sends a second request to the first communication module, where the second request indicates the identity of the second communication module, and a data length of the first request is different from a data length of the second request. The first communication module receives the second request from the second communication module. The first communication module processes the second request when identity verification of the second communication module succeeds. The first communication module sends, to the second communication module, a second response obtained by processing the second request, where a data length of the first response is different from a data length of the second response. The second communication module receives, from the first communication module, the second response to the second request.

In the method shown in FIG. 4, the control information included in the processing request sent by the primary processor core to the secondary processor core is information of a fixed length, for example, a single physical address of the memory. In this embodiment, the data length of the first request sent by the second communication module to the first communication module may be an unfixed length, for example, a plurality of physical addresses of the memory. Similarly, the data length of the first response sent by the first processor core to the second processor core may be an unfixed length.

In the technical solution provided in this embodiment of this application, the second communication module may send the first request and the second request to the first communication module for processing, the data length of the first request is different from the data length of the second request, and the data length of the first response to the first request is different from the data length of the second response to the second request. In this way, when the first communication module communicates with the second communication module, data lengths and request types that may be sent are more diversified, and a plurality of original requests may be combined into one request for sending, so that deep collaboration can be performed between the first processor core on which the first communication module is run and the second processor core on which the second communication module is run.

In a possible implementation, both the first processor core and the second processor core are coupled to the memory, and the first processor core is further coupled to a non-volatile memory. For example, the memory may be used as a shared memory. The first request is used to request to perform at least one of the following functions: non-volatile memory access, standard inter-process communication, or page fault exception handling.

In an example, that the first request is used for non-volatile memory access may include: accessing data in the non-volatile memory. That the target process run in the second operating system accesses the data in the non-volatile memory includes but is not limited to: The target process opens (open) file data in the non-volatile memory, the target process maps (map) the file data in the non-volatile memory to the memory, the target process reads (read) the file data in the non-volatile memory, the target process writes (write) file data in the non-volatile memory, and the target process closes (close) the file data in the non-volatile memory.

Next, an application scenario of the first request is described by using an example in which the first processor core is a primary processor core, the second processor core is a secondary processor core, and the non-volatile memory is a hard disk.
(1) The first request may be used by the target process to open file data in the hard disk, and the communication method may include the following.

The target process run in the second operating system invokes an open function in a function library libc and sends an initial request to the second kernel, where the initial request is used to open a target file in the hard disk, and the initial request includes a first directory path of the target file in the hard disk.

The request forwarding module intercepts the initial request, adds the identity identification information of the second communication module into the initial request to obtain the first request, and sends the first request to the second control information management module.

The second control information management module receives the first request and sends the first request to the first control information management module. The first control information management module receives the first request and sends the first request to the identity agent module.

The identity agent module determines that the identity identification information in the first request is correct and sends the first request to the first kernel.

The first kernel receives and processes the first request. Specifically, in response to the first request, the first kernel allocates a file descriptor to the target file based on the first directory path in the hard disk. The first kernel sends the first response to the identity agent module, where the first response includes the file descriptor of the target file.

The identity agent module receives the first response and sends the first response to the first control information management module. The first control information management module receives the first response and sends the first response to the second control information management module. The second control information management module receives the first response and sends the first request to the request forwarding module.

The request forwarding module receives the first response and sends the first response to the second kernel, where the first response is used to record a relationship between the file descriptor and the target file.

The second kernel receives the first response and performs subsequent processing on the first response. Specifically, the second kernel records the relationship between the file descriptor and the target file. The second kernel sends the processed first response to the target process, where the processed first response may indicate that the target file is successfully opened, and the processed first response includes the file descriptor.

(2) The first request may be used by the target process to read file data in the hard disk, and the communication method may include the following.

The target process run in the second operating system invokes a read function and sends an initial request to the second kernel, where the initial request is used to read a target file in the hard disk, and the initial request includes a first virtual address of the memory used to read data of the target file, and a file descriptor of the target file.

The request forwarding module intercepts the initial request, adds the identity identification information of the second communication module into the initial request to obtain the first request, and sends the first request to the second control information management module.

The first request is sent to the identity agent module through the second control information management module and the first control information management module. The identity agent module determines that the identity identification information in the first request is correct and sends the first request to the first kernel.

The first kernel receives and processes the first request. Specifically, in response to the first request, the first kernel determines the target file based on the file descriptor of the target file and writes data of the target file from the hard disk into a fourth physical address corresponding to the first virtual address of the memory. The first kernel sends the first response to the identity agent module, where the first response includes a size of the data of the target file stored in the memory based on the first request.

The first response is sent to the second kernel through the identity agent module, the first control information management module, the second control information management module, and the request forwarding module, and the second kernel receives the first response and sends the first response to the target process. Then, the target process may read the data of the target file from the memory based on the first virtual address of the memory.

(3) The first request may be used by the target process to write file data in the hard disk, and the communication method may include the following.

The target process run in the second operating system writes data of a target file into a fifth physical address corresponding to a second virtual address of the memory. The target process invokes a write function and sends an initial request to the second kernel, where the initial request is used to write the target file into the hard disk, and the initial request includes the second virtual address of the memory and a file descriptor of the target file.

The request forwarding module intercepts the initial request, adds the identity identification information of the second communication module into the initial request to obtain the first request, and sends the first request to the second control information management module.

The first request is sent to the identity agent module through the second control information management module and the first control information management module. The identity agent module determines that the identity identification information in the first request is correct and sends the first request to the first kernel.

The first kernel receives and processes the first request. Specifically, in response to the first request, the first kernel determines the target file based on the file descriptor of the object file, and writes, into the hard disk, data of the target file stored at the fifth physical address corresponding to the second virtual address of the memory. The first kernel sends the first response to the identity agent module, where the first response includes a size of the data of the target file written into the hard disk based on the first request.

The first response is sent to the second kernel through the identity agent module, the first control information management module, the second control information management module, and the request forwarding module, and the second kernel receives the first response and sends the first response to the target process.

(4) The first request may be used by the target process to close file data in the hard disk. The communication method may include the following.

The target process run in the second operating system invokes a close function and sends an initial request to the second kernel, where the initial request is used to close a target file, and the initial request includes a file descriptor of the target file.

The request forwarding module intercepts the initial request, adds the identity identification information of the second communication module into the initial request to obtain the first request, and sends the first request to the second control information management module.

The first request is sent to the identity agent module through the second control information management module and the first control information management module. The identity agent module determines that the identity identification information in the first request is correct and sends the first request to the first kernel.

The first kernel receives and processes the first request. Specifically, in response to the first request, the first kernel determines the target file based on the file descriptor of the target file. The first kernel sends the first response to the identity agent module, where the first response indicates deletion of a correspondence between the target file and the file descriptor.

The first response is sent to the second kernel through the identity agent module, the first control information management module, the second control information management module, and the request forwarding module, where the first response indicates deletion of the correspondence between the target file and the file descriptor. The second kernel receives the first response, deletes the correspondence between the target file and the file descriptor, and sends the processed first response to the target process, where the processed first response may indicate that the target file is successfully closed.

After related content of the first request being used for non-volatile memory access is described, that the first request is used for standard inter-process communication or page fault exception handling is described.

In an example, the first request may be used for standard inter-process communication. The standard inter-process communication means communication between processes in a same domain. Standard inter-process communication includes portable operating system interface inter-process communication (portable operating system interface inter-process communication, POSIX IPC) and system V inter-process communication (system V inter-process communication, SYSV IPC). Because the first communication module may identify the identity of the second communication module and identify the first request as an internal request of the first communication module, standard inter-process communication can be implemented.

In another example, that the first request is used for page fault exception handling may include: when page fault exception occurs, obtaining a first physical address corresponding to a third virtual address of the memory, and establishing a mapping relationship between the first physical address and the third virtual address. The page fault exception means that when accessing a virtual address of the memory, a process finds that no association is established between the virtual address and a physical address. In this case, the process sends a page fault exception request to a kernel, where the page fault exception request is used to establish the association between the virtual address and the physical address. After the second communication module sends the page fault exception, the page fault exception request is forwarded to the first communication module. After processing, the first communication module finds a corresponding first physical address (page cache address) and returns the first physical address to the second communication module. The second communication module establishes the mapping relationship by using the first physical address returned by the first communication module, so that the first communication module and the second communication module share the page cache address, thereby saving a memory space.

Next, an application scenario of the first request is described by using an example in which the first processor core is a primary processor core, the second processor core is a secondary processor core, and the non-volatile memory is the hard disk.

The target process run in the second operating system accesses the third virtual address of the memory, and the memory feeds back, to the target process, that no association is established between the third virtual address and the physical address. The target process sends an initial request to the second kernel, where the initial request is used to obtain the first physical address of the memory and establish the mapping relationship between the first physical address and the third virtual address, and the initial request includes the third virtual address of the memory.

The request forwarding module intercepts the initial request, adds the identity identification information of the second communication module into the initial request to obtain the first request, and sends the first request to the second control information management module.

The first request is sent to the identity agent module through the second control information management module and the first control information management module. The identity agent module determines that the identity identification information in the first request is correct and sends the first request to the first kernel.

The first kernel receives and processes the first request. Specifically, the first kernel obtains, in response to the first request, the first physical address allocated by the memory to the third virtual address. The first kernel sends the first response to the identity agent module, where the first response includes the first physical address of the memory.

The first response is sent to the second kernel through the identity agent module, the first control information management module, the second control information management module, and the request forwarding module. The first response indicates establishment of the mapping relationship between the third virtual address and the first physical address of the memory. The second kernel receives the first response and writes the mapping relationship between the third virtual address and the first physical address into a page table of the memory. The second kernel sends the processed first response to the target process, where the processed first response may indicate that the mapping relationship between the first physical address and the third virtual address is successfully established. In this way, both the first communication module and the second communication module can use the mapping relationship between the first physical address and the third virtual address, so that the first communication module and the second communication module share the page cache address.

In the method shown in FIG. 4, for a service that needs the primary processor core to send a plurality of requests to the secondary processor core for processing, in this embodiment, the first processor core needs to send only one first request to the second processor core to process the service. For example, in the method shown in FIG. 4, a request sent by a primary processor to a secondary processor includes only one physical address. In this embodiment, the first request may include a plurality of physical addresses, and therefore, a plurality of services that share a page cache can be executed at a time.

In the technical solution provided in this embodiment of this application, the first request is used to perform at least one of the following: non-volatile memory access, standard inter-process communication, or page fault exception handling. In this way, in one aspect, the second communication module does not need to depend on a file system to access a file, the second communication module can access a file of the first communication module, shared file access can be implemented between the second communication module and the first communication module, and the first communication module can offload a core service to the second communication module for processing. In another aspect, the first communication module and the second communication module can implement collaboration on page fault exception, so that the first communication module and the second communication module can share a page cache, to save a memory space. In still another aspect, the first communication module and the second communication module can implement cross-domain standard inter-process communication. Therefore, deep collaboration can be performed between the first processor core on which the first communication module is run and the second processor core on which the second communication module is run.

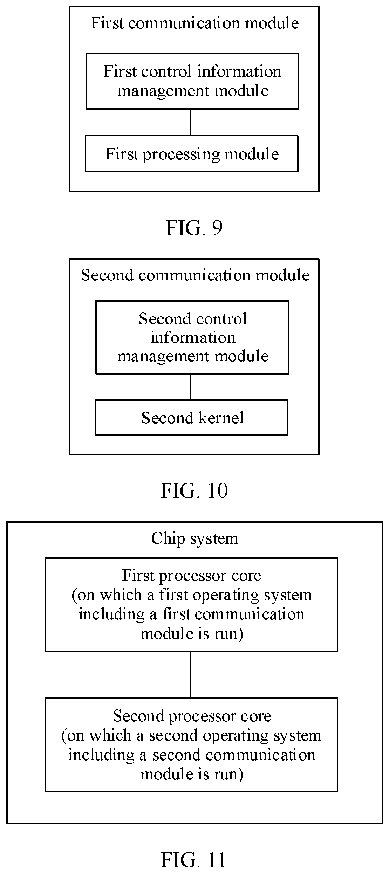

An embodiment of this application further provides a communication apparatus. FIG. 9 is a diagram of a communication apparatus according to an embodiment of this application. The apparatus includes a first communication module in a first operating system. The first operating system is run on a first processor core. The first communication module is configured to communicate with a second communication module in a second operating system. The second operating system is run on a second processor core. The first processor core and the second processor core are located in a same electronic device. The first communication module includes a first control information management module and a first processing module. The first control information management module is configured to receive a first request from the second communication module, where the first request indicates an identity of the second communication module. The first processing module is configured to process the first request when identity verification of the second communication module succeeds. The first control information management module is configured to send, to the second communication module, a first response obtained by processing the first request.

In an optional implementation, the first control information management module is specifically configured to obtain the first request from a target memory space, where the target memory space is used to store request data of the second communication module whose identity verification succeeds. When the first request is obtained from the target memory space, identity verification of the second communication module succeeds.

In an optional implementation, the first control information management module supports transmission of information of different data lengths. The first control information management module is further configured to receive a second request from the second communication module, where the second request indicates the identity of the second communication module, and a data length of the first request is different from a data length of the second request. The first processing module is further configured to process the second request when identity verification of the second communication module succeeds. The first control information management module is further configured to send, to the second communication module, a second response obtained by processing the second request, where a data length of the first response is different from a data length of the second response.

In an optional implementation, the first processing module includes an identity agent module and a first kernel. The identity agent module is configured to generate a third request based on the first request. The first kernel is configured to process the third request, where the first response is a response to the third request.

In an optional implementation, the first request includes identity identification information of the second communication module, and the first processing module includes the identity agent module. The identity agent module is configured to verify the identity identification information. That identity verification of the second communication module succeeds includes: Verification of the identity identification information succeeds.

In an optional implementation, the first request is used to request to perform at least one of the following functions: non-volatile memory access, standard inter-process communication, or page fault exception handling.

It may be understood that functional modules of the communication apparatus may be separately configured to implement at least one step in the communication method shown in FIG. 5 or FIG. 8. Because the steps are described in detail in the foregoing communication method embodiment, for effect that can be achieved by the steps, refer to the foregoing communication method embodiment. Details are not described herein again.

An embodiment of this application further provides a communication apparatus. FIG. 10 is a diagram of another communication apparatus according to an embodiment of this application. The apparatus includes a second communication module in a second operating system. The second operating system is run on a second processor core. The second communication module is configured to communicate with a first communication module in a first operating system. The first operating system is run on a first processor core. The first processor core and the second processor core are located in a same electronic device. The second communication module includes a second control information management module. The second control information management module is configured to send a first request to the first communication module, where the first request indicates an identity of the second communication module. The second control information management module is configured to receive, from the first communication module, a first response to the first request.

In an optional implementation, the second control information management module is specifically configured to store the first request in a target memory space, where the target memory space is used to store request data of the second communication module whose identity verification succeeds.

In an optional implementation, the second control information management module supports transmission of information of different data lengths. The second control information management module is further configured to send a second request to the first communication module, where the second request indicates the identity of the second communication module, and a data length of the first request is different from a data length of the second request. The second control information management module is further configured to receive, from the first communication module, a second response to the second request, where a data length of the first response is different from a data length of the second response.

In an optional implementation, the second communication module further includes a request forwarding module, and a target process is run in the second operating system. The request forwarding module is configured to: obtain an initial request from the target process and generate the first request based on the initial request, where the first request includes identity identification information of the second communication module.

In an optional implementation, the second communication module further includes a second kernel. The second kernel is configured to process the first response and send a processed first response to the target process.

In an optional implementation, the first request is used to request to perform at least one of the following functions: non-volatile memory access, standard inter-process communication, or page fault exception handling.

It may be understood that functional modules of the communication apparatus may be separately configured to implement at least one step in the communication method shown in FIG. 6 or FIG. 8. Because the steps are described in detail in the foregoing communication method embodiment, for effect that can be achieved by the steps, refer to the foregoing communication method embodiment. Details are not described herein again.

An embodiment of this application further provides a chip system. For a structure of the electronic device, refer to FIG. 11. The chip system includes a first processor core and a second processor core. A first operating system including a first communication module is run on the first processor core, and the first communication module is configured to perform at least one step in the foregoing corresponding method embodiment, for example, at least one step in FIG. 5 and FIG. 8. A second operating system including a second communication module is run on the second processor core, and the second communication module is configured to perform at least one step in the foregoing corresponding method embodiment, for example, at least one step in FIG. 6 and FIG. 8.

It may be understood that the chip system may be configured to implement at least one step in the communication method shown in FIG. 5, FIG. 6, or FIG. 8. Because the steps are described in detail in the foregoing communication method embodiment, for effect that can be achieved by the steps, refer to the foregoing communication method embodiment. Details are not described herein again.

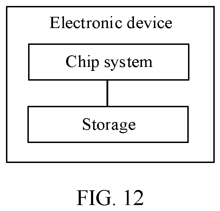

An embodiment of this application further provides an electronic device. For a structure of the electronic device, refer to FIG. 12. The electronic device includes the foregoing chip system and a storage. The storage stores instructions, and when the chip system runs the instructions in the storage, the electronic device is enabled to perform at least one step in the communication method shown in FIG. 5, FIG. 6, or FIG. 8. It may be understood that, because the steps are described in detail in the foregoing communication method embodiment, for effect that can be achieved by the steps, refer to the foregoing communication method embodiment. Details are not described herein again. For example, the electronic device includes at least one of the following: a receiver, a switch, a router, or a vehicle.

Embodiments of this application further provide a computer-readable storage medium. The computer-readable storage medium stores program code, and the program code may be invoked by a processor to perform at least one step in the communication method shown in FIG. 5, FIG. 6, or FIG. 8. It may be understood that, because the steps are described in detail in the foregoing communication method embodiment, for effect that can be achieved by the steps, refer to the foregoing communication method embodiment. Details are not described herein again.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is applied to a first communication module in a first operating system, the first operating system is run on a first processor core, the first communication module is configured to communicate with a second communication module in a second operating system, the second operating system is run on a second processor core, the first processor core and the second processor core are located in a same electronic device, and the method comprises:
receiving a first request from the second communication module, wherein the first request indicates an identity of the second communication module;
when identity verification of the second communication module succeeds, processing the first request; and
sending, to the second communication module, a first response obtained by processing the first request.

2. The method according to claim 1, wherein receiving the first request from the second communication module comprises:
obtaining the first request from a target memory space, wherein the target memory space is used to store request data of the second communication module whose identity verification succeeds, wherein
when the first request is obtained from the target memory space, identity verification of the second communication module succeeds.

3. The method according to claim 1 or 2, wherein the method further comprises:
receiving a second request from the second communication module, wherein the second request indicates the identity of the second communication module, and a data length of the first request is different from a data length of the second request;
when identity verification of the second communication module succeeds, processing the second request; and
sending, to the second communication module, a second response obtained by processing the second request, wherein a data length of the first response is different from a data length of the second response.

4. The method according to any one of claims 1 to 3, wherein processing the first request comprises:
generating a third request based on the first request; and
processing the third request, wherein the first response is a response to the third request.

5. The method according to claim 1, wherein the first request comprises identity identification information of the second communication module; and
that identity verification of the second communication module succeeds comprises: verification of the identity identification information succeeds.

6. The method according to any one of claims 1 to 5, wherein the first request is used to request to perform at least one of the following functions: non-volatile memory access, standard inter-process communication, or page fault exception handling.

7. A communication method, wherein the method is applied to a second communication module in a second operating system, the second operating system is run on a second processor core, the second communication module is configured to communicate with a first communication module in a first operating system, the first operating system is run on a first processor core, the first processor core and the second processor core are located in a same electronic device, and the method comprises:
sending a first request to the first communication module, wherein the first request indicates an identity of the second communication module; and
receiving, from the first communication module, a first response to the first request.

8. The method according to claim 7, wherein sending the first request to the first communication module comprises:
storing the first request in a target memory space, wherein the target memory space is used to store request data of the second communication module whose identity verification succeeds.

9. The method according to claim 7 or 8, wherein the method further comprises:
sending a second request to the first communication module, wherein the second request indicates the identity of the second communication module, and a data length of the first request is different from a data length of the second request; and
receiving, from the first communication module, a second response to the second request, wherein a data length of the first response is different from a data length of the second response.

10. The method according to claim 7, wherein a target process is run in the second operating system; and
before sending the first request to the first communication module, the method further comprises:
obtaining an initial request from the target process, and generating the first request based on the initial request, wherein the first request comprises identity identification information of the second communication module.

11. The method according to claim 10, wherein after receiving, from the first communication module, the first response to the first request, the method further comprises:
processing the first response, and sending a processed first response to the target process.

12. The method according to any one of claims 7 to 11, wherein the first request is used to request to perform at least one of the following functions: non-volatile memory access, standard inter-process communication, or page fault exception handling.

13. A communication apparatus, wherein the apparatus comprises a first communication module in a first operating system, the first operating system is run on a first processor core, the first communication module is configured to communicate with a second communication module in a second operating system, the second operating system is run on a second processor core, the first processor core and the second processor core are located in a same electronic device, and the first communication module comprises a first control information management module and a first processing module;
the first control information management module is configured to receive a first request from the second communication module, wherein the first request indicates an identity of the second communication module;
the first processing module is configured to process the first request when identity verification of the second communication module succeeds; and
the first control information management module is configured to send, to the second communication module, a first response obtained by processing the first request.

14. The apparatus according to claim 13, wherein the first control information management module is specifically configured to obtain the first request from a target memory space, and the target memory space is used to store request data of the second communication module whose identity verification succeeds, wherein
when the first request is obtained from the target memory space, identity verification of the second communication module succeeds.

15. The apparatus according to claim 13 or 14, wherein the first control information management module supports transmission of information of different data lengths;
the first control information management module is further configured to receive a second request from the second communication module, wherein the second request indicates the identity of the second communication module, and a data length of the first request is different from a data length of the second request;
the first processing module is further configured to process the second request when identity verification of the second communication module succeeds; and
the first control information management module is further configured to send, to the second communication module, a second response obtained by processing the second request, wherein a data length of the first response is different from a data length of the second response.

16. The apparatus according to any one of claims 13 to 15, wherein the first processing module comprises an identity agent module and a first kernel;
the identity agent module is configured to generate a third request based on the first request; and
the first kernel is configured to process the third request, wherein the first response is a response to the third request.

17. The apparatus according to claim 13, wherein the first request comprises identity identification information of the second communication module, and the first processing module comprises an identity agent module;
the identity agent module is configured to verify the identity identification information; and
that identity verification of the second communication module succeeds comprises: verification of the identity identification information succeeds.

18. The apparatus according to any one of claims 13 to 17, wherein the first request is used to request to perform at least one of the following functions: non-volatile memory access, standard inter-process communication, or page fault exception handling.

19. A communication apparatus, wherein the apparatus comprises a second communication module in a second operating system, the second operating system is run on a second processor core, the second communication module is configured to communicate with a first communication module in a first operating system, the first operating system is run on a first processor core, the first processor core and the second processor core are located in a same electronic device, and the second communication module comprises a second control information management module;
the second control information management module is configured to send a first request to the first communication module, wherein the first request indicates an identity of the second communication module; and
the second control information management module is configured to receive, from the first communication module, a first response to the first request.

20. The apparatus according to claim 19, wherein the second control information management module is specifically configured to store the first request in a target memory space, wherein the target memory space is used to store request data of the second communication module whose identity verification succeeds.

21. The apparatus according to claim 19 or 20, wherein the second control information management module supports transmission of information of different data lengths;
the second control information management module is further configured to send a second request to the first communication module, wherein the second request indicates the identity of the second communication module, and a data length of the first request is different from a data length of the second request; and
the second control information management module is further configured to receive, from the first communication module, a second response to the second request, wherein a data length of the first response is different from a data length of the second response.

22. The apparatus according to claim 19, wherein the second communication module further comprises a request forwarding module, and a target process is run in the second operating system; and
the request forwarding module is configured to: obtain an initial request from the target process, and generate the first request based on the initial request, wherein the first request comprises identity identification information of the second communication module.

23. The apparatus according to claim 22, wherein the second communication module further comprises a second kernel; and
the second kernel is configured to: process the first response and send a processed first response to the target process.

24. The apparatus according to any one of claims 19 to 23, wherein the first request is used to request to perform at least one of the following functions: non-volatile memory access, standard inter-process communication, or page fault exception handling.

25. A chip system, wherein the chip system comprises a first processor core and a second processor core;
a first operating system is run on the first processor core, the first operating system comprises a first communication module, and the first communication module is configured to perform the communication method according to any one of claims 1 to 6; and
a second operating system is run on the second processor core, the second operating system comprises a second communication module, and the second communication module is configured to perform the communication method according to any one of claims 7 to 12.

26. An electronic device, wherein the electronic device comprises a storage and the chip system according to claim 25.

27. The electronic device according to claim 26, wherein the electronic device comprises at least one of the following: a receiver, a switch, a router, or a vehicle.

28. A computer-readable storage medium, wherein the computer-readable storage medium stores program code, and the program code may be invoked by a processor to perform the method according to any one of claims 1 to 12.
